Europäisches Patentamt

European Patent Office

Office européen des brevets

(11) Publication number: **0 080 853**
**B1**

(12) **EUROPEAN PATENT SPECIFICATION**

(45) Date of publication of patent specification: **10.09.86**

(51) Int. Cl.⁴: **G 21 C 3/30, G 21 C 3/34**

(21) Application number: **82306241.9**

(22) Date of filing: **23.11.82**

(54) Anti-bow grid for nuclear fuel assembly.

(30) Priority: **30.11.81 US 325712**

(43) Date of publication of application:
**08.06.83 Bulletin 83/23**

(45) Publication of the grant of the patent:
**10.09.86 Bulletin 86/37**

(84) Designated Contracting States:
**BE DE FR GB**

(56) References cited:
**GB-A-1 425 252**
**GB-A-1 517 670**
**GB-A-2 022 909**
**US-A-3 389 056**
**US-A-3 751 335**
**US-A-4 059 483**

(73) Proprietor: **COMBUSTION ENGINEERING, INC.**
**1000 Prospect Hill Road Box 500**
**Windsor Connecticut 06095-0500 (US)**

(72) Inventor: **Andrew, James Anthony**
**18 West Point Terrace**
**Tariffville Connecticut, 06081 (US)**

(74) Representative: **Johnson, Terence Leslie**
**Edward Evans & Co. Chancery House 53-64**
**Chancery Lane**
**London WC2A 1SD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to fuel assemblies for nuclear reactors, and in particular to structure carried by the assemblies for maintaining proper inter-assembly spacing and alignment.

The nuclear reactor core of a pressurized water power reactor typically consists of a multiplicity of elongated, square fuel assemblies, each containing a square array of some two hundred individual fuel rods. The rods are supported in the assembly by a plurality of longitudinally spaced, transversely oriented grids which in turn are affixed to rigid, longitudinally extending tubes or columns. Thse support tubes are secured in end fittings which are seated directly or indirectly to support plates connected to the reactor vessel. A major objective of this fuel arrangement is to maintain proper spacing between individual fuel rods with in each assembly, and between the assemblies.

Various normal conditions occur during core operations which alter the as-built, nominal spacings. One obvious condition is coolant temperature, which typically varies from a spatially uniform value of about 38°C (100°F) during refueling to a spatially varying value in the range, for example of 293°C to 326°C (560°F—620°F). In reactors using a steel vessel and support plates, and substantially all-Zircaloy fuel assemblies, a difference in coefficient of thermal expansion introduces a spatial dependence in the fuel assembly spacing. Another normally present effect is the dimensional change in the assemblies with time, as a result of irradiation-induced creep and growth. These temperature and irradiation effects have been accommodated to a tolerable degree with careful design and manufacturing.

Other conditions, however, have been found to require additional attention and have posed problems less amenable to easy solution, particularly in cores having all-Zircaloy assemblies. For example, the core must be capable of withstanding the load imposed by hypothesized seismic disturbances which, being primarily in the lateral direction, could cause assemblies to impact and damage one another. Therefore, to reduce impact loading, the prior art has, to a large extent, found it desirable to minimize the interassembly spacing during reactor power operation, yet provide adequate clearance to permit removal and rearrangement of assemblies during refueling. A commonly proposed technique uses bimetallic structures carried by or acting against the fuel assemblies to provide a "tighter" core during power production than during refueling. One such example is shown in U.S.—A—4,059,483 "Nuclear Fuel Assembly Seismic Amplitude Limiter," where the midplane of every assembly carries a stainless steel "seismic grid" rather than a conventional all-Zircaloy spacer grid.

Recently, another operating condition known as fuel assembly bowing has been observed. Bowing produces a pronounced, permanent curvature in the intermemdiate portions of the fuel assemblies, which worsens as burnup increases during a fuel cycle. When accumulated over several assemblies across the core midplane, bowing may impair the neutronics-related safety margins, during power operation, and impede fuel assembly removal or replacement during refueling.

Although some of the prior art fuel assembly designs intended for use in areas of high seismic activity might, to some extent, incidentally reduce the adverse effects of bowing, they are deficient in several respects, especially when used in all-Zircaloy fuel assemblies:

1. Most rely on bi-metallic structure, which is expensive to fabricate and usually introduces unwanted, strongly neutron absorbing material in the core.
2. The applied inter-assembly forces are either too weak, or effective over insufficient area, to adequately counteract the bowing forces.
3. The burnup dependence of the bowing phenomenon is not adequately accounted for.

If the spacing between assemblies is simply reduced to a value where bowing is limited to an acceptable value not only is there difficulty in initial fuel assembly loading but because of irradiation growth of grids as a function of time (burnup) it is likely that the core could be "locked up" so that fuel removal would be extremely difficult. Therefore what is required is a grid which provides the desired close spacing between fuel assemblies, but which is resilient enough to account for irradiation induced grid growth and normal refueling loads.

Accordingly, it is an object of the present invention to provide a fuel assembly which seeks to overcome these deficiencies, and which can be easily fabricated and readily inserted into existing pressurized water reactors. According to one aspect of the invention there is provided a nuclear fuel assembly frame of the type having a plurality of axially spaced apart grids, each grid having a plurality of substantially flat, rigid perimeter plates circumscribing a network of rigid interlaced strips, the strips forming a rigid egg-crate structure defining an array of openings each adapted to receive a nuclear fuel rod transversely of the grid, characterised by:—

at least the grid disposed at the mid-plane of the frame having a plurality of anti-bowing springs integrally formed on the outer surface of each perimeter plate and projecting outwardly therefrom a predetermined distance, the springs being horizontally separated in periodic alternation with substantially flat portions of the outer surface of said plate.

These and other advantages are especially beneficial with all-Zircaloy fuel assemblies.

According to a second aspect of the invention there is provided a combination of two elongated nuclear fuel assemblies of the type having a plurality of longitudinally spaced apart grids supporting a regular array of elongated fuel rods, each grid including a plurality of substantially flat, rigid perimeter plates circumscribing the fuel rods and defining a polygonal assembly cross section, the assemblies further being supported in parallel side by side relationship such that an arbitrary first perimeter plate of a mid-plane grid of one assembly is coextensive and opposite an arbitrary second perimeter plate of a corresponding mid-plane grid of another assembly whereby a predetermined nominal gap is provided therebetween, characterised by:

said respective first and second perimeter plates each having a plurality of anti-bowing springs, integrally formed thereon and projecting outwardly therefrom, the springs being laterally separated in periodic alternation with substantially flat portions of the outer surfaces of the respective plates such that each spring of the first perimeter plate is opposite a flat surface on the second plate, and conversely, each spring on the second plate is opposite a flat surface on the first plate.

In one embodiment, the anti-bowing springs are all of the same or primary, type. The primary spring projection is preferably sufficient to load the spring when the assembly is first inserted into the core. As the core heats up to power, the inter-assembly gap typically increases due to the different expansion coefficients for the core support plate and the all-Zircaloy fuel assemblies. Thus, upon core heatup, the primary springs are slightly unloaded, but continue to occupy the inter-assembly gap at regular intervals around the entire grid perimeter and thereby inhibit bowing early in the fuel cycle. During the burnup cycle the irradiation-induced behaviour of the Zircaloy grids tends to decrease the inter-assembly gap. However, when the springs make contact with adjacent surfaces, an irradiation induced creep phenomena is also present in the springs which tends to decrease spring projection inelastically as a function of time. The overall effect loosens the lateral restraint throughout the core, with a consequent initiation of some degree of bowing in some regions of the core. The nuclear related margins however are not impaired and refueling may proceed at the end of cycle.

In the case of non-Zircaloy anti bow grids, e.g., AM350 or Inconel, both the growth and creep phenomena are significantly less than that of Zircaloy grids, hence fuel assembly bowing can be nearly eliminated.

Where secondary anti-bowing springs are alternated with the primary springs around the perimeter of the grid, the secondary springs are stiffer and have a shorter projection. Therefore they do not come in contact with the respective opposite flat surface until well into the burnup cycle when bowing forces may overcome the primary springs.

Backup springs may also be provided to resist bowing forces should they unexpectedly overcome the primary and secondary springs. In one embodiment, very stiff backup springs are formed as ridges on the grid plate, projecting parallel with and adjacent to the anti-bowing springs for interacting on substantially the same flat surface on the opposite grid, as the anti-bowing springs. The backup springs also provide the stiff buffer between assemblies required of special seismic grids, and accordingly eliminate the need for separate seismic grids. Back up springs also serve as amplitude limiting devices for the primary and secondary springs during a seismic event such that the deflection of primary and secondary springs remains elastic.

The best mode for carrying out the invention is fully described hereinbelow and in the accompanying drawings, in which:

Figures 1 and 1A are schematic views of a typical pressurized water reactor fuel assembly showing a plurality of longitudinally spaced grids and, in an exaggerated, phantom representation, the effect of bowing thereon.

Figure 2 is a partial plan view of two oppositely disposed grids in accordance with the present invention, located at the approximate midplane of two adjacent assemblies in a nuclear reactor core, with the fuel rods ommitted for clarity.

Figure 3 is an elevation view of a portion of one of the grids shown in Figure 2, along the sight line 3.

Figure 4 is a section of the grid taken along the line 4—4 of Figure 3, showing the projections of the primary anti-bowing spring from the outer surface of the grid perimeter plate.

Figure 5 is an elevation view of a portion of a grid according to an alternative embodiment of the invention, wherein primary and secondary anti-bowing springs having different dimensions are employed.

Figure 6 is a section view through the secondary spring along line 6—6 of Figure 5, showing the details thereof including the vertical crowning.

Figure 7 is a section of the secondary spring along line 7—7 of Figure 6, showing the horizontal crowning.

Figure 8 is an enlarged, detailed view of a backup spring projecting from the grid plate.

Figure 9 is a schematic elevation view of two oppositely facing grids on adjacent assemblies according to the embodiment of the invention shown in Figure 5, illustrating the different projections of the primary, secondary, and backup springs.

Description of the preferred embodiments

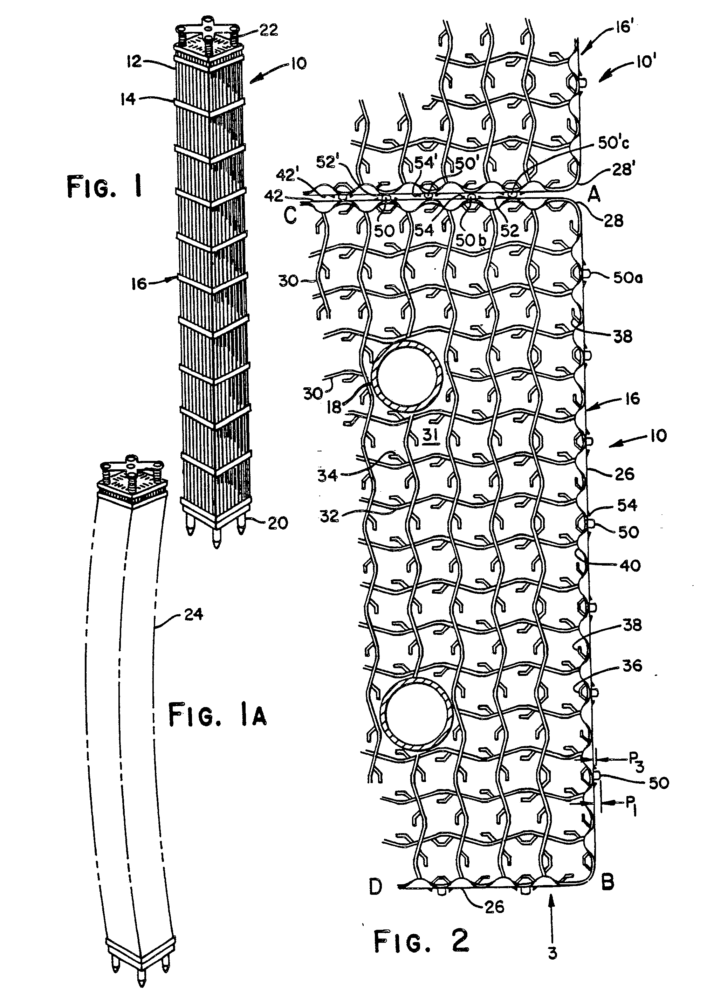

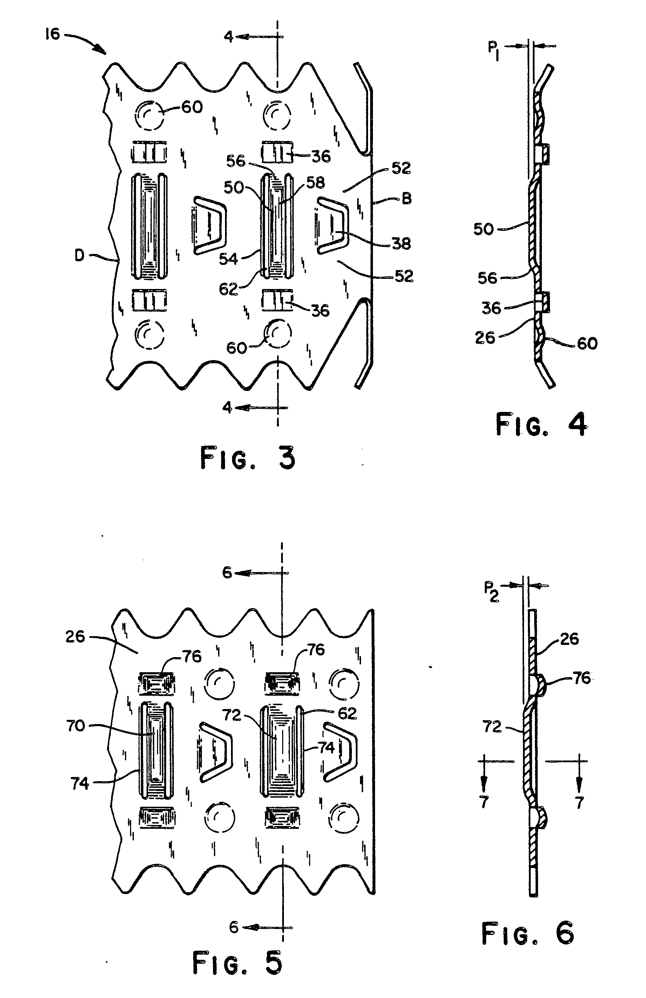

Figures 1 and 2 show a typical fuel assembly 10 for a pressurized water nuclear power reactor, including a multiplicity of elongated fuel rods 12 spaced and supported in a square array by a plurality of longitudinally separator spacer grids 14 including one grid 16 at substantially the assembly midplane. As shown in Figure 2, the grids 14, 16 consist of interlaced strips forming an egg crate-type structure which provides openings through which the fuel rods traverse the grids. The grids 14, 16 are affixed to support tubes 18 which extend longitudinally through the fuel assembly and are connected to lower end fittings 20 and upper end fittings 22 at the extremities of the fuel assembly. The grids 14, 16, support tubes 18, and lower and upper end fitting 20, 22 are the structural frame of the assembly 10.

In one commonly used pressurized water reactor core, the entire fuel assembly metallic structure, except for the end fittings 20, 22, is made from Zircaloy, a material which is relatively transparent to thermal neutrons. The end fittings 20, 22 are typically made of less costly, but neutronically less desirably, stainless steel. The end fittings 20, 22 are adapted to engage upper and lower stainless steel core support plates (not shown) in the nuclear reactor vessel whereby the multiplicity of fuel assemblies may be arranged in a closely packed array fo form the nuclear reactor core.

Recently, it has beeen observed during the refueling of reactor cores, that some burned fuel assemblies have developed a permanent deformation resembling a bow. This bow is represented, with great exaggeration, by the phantom lines 24 in Figure 1A. Usually, bowing develops as a curvature of the intermediate portion of the fuel assembly with a slight bias towards the upper portion of the fuel assembly. Since every fuel assembly 10 has its extremities 20, 22 secured to rigid core support structure, the assembly midplane is most vulnerable to lateral forces that may develop as a result of flow or other asymmetries in the core. The forces giving rise to bowing act over a wide area of the core and can produce very large assembly deformations at the core boundary when the bowing of several assemblies accumulates in one direction.

According to the present invention, the entire core midplane is maintained in a somewhat "tight" condition throughout the burnup cycle to inhibit significant bowing. Since the spacing between adjacent fuel assemblies is maintained in the presence of high bowing forces, the individual assembly deformation is limited. Bowing of individual assemblies does not accumulate sufficiently to significantly deform the entire core.

In a typical fuel assembly 10 of the type represented in Figures 1 and 2, each grid 14, 16 has a nominal, cold outer dimension of 20.6 cm. (8.14 inches square). The nominal clearance, or gap, between the grids of adjacent fuel assemblies in the core is about 0.113 cm (0.045 inch). Four substantially flat perimeter plates 26 are welded at their ends 28 to form the rectangular perimeter of the grids 14, 16. In the illustrated embodiment, fifteen vertical and fifteen horizontal grid strips 30 are interlaced to define openings 31 though which the fuel rods 12 traverse the grids. The strips defining each opening include at least one arch 32 and spring tab 34, and the inside surface 40 of the perimeter plate 26 includes corresponding arches 36 and spring tabs 38 for spacing and supporting the fuel rods 12.

Figure 2 also shows an adjacent assembly 10' including midplane grid 16' at the same elevation on the assembly as grid 16 is with respect to assembly 10. Arbitratrily chosen, oppositely facing grid outer surfaces 42, 42' are coextensive and include, according to the present invention, a plurality of laterally spaced projections including primary springs 50, 50' and backup springs 54, 54'. It may be seen that each primary spring 50 on grid 16 is in contact with a substantially flat portion 52' on the outer surface 42' of grid 16', and similarly the primary spring 50' of assembly 16' is in contact with a substantially flat surface 52 on grid 16. Also, each backup spring 54 on grid 16 is opposite a substantially flat surface 52' on grid 16', although not incontact therewith under the conditions illustrated in Figure 2.

In the illustrated embodiment, the nominal projection $P_1$ of the primary spring 50 from the outer surface 42 of grid 16 is about 0.127 cm (0.050 inch)) in the cold condition and accordingly when the assemblies are packed into the reactor core the primary spring 50 will be displaced, or loaded by a force corresponding to approximately 0.013 cm (0.005 inch) deflection. With a grid having a 16 × 16 fuel array, preferably seven such primary springs 50 are provided on each perimeter plate 26 in alternation with the flat area 52 through which the tabs 38 project internally of the grid 16. Therefore a total of seven primary springs are in contact at each fuel assembly interface.

It may also be seen that, taking the juncture 28 as the point of origin A on grid 16, the perimeter plate extending from A—B has a primary spring 50a located on the plate outer surface corresponding to the second fuel rod position from the point of origin A. Along the direction A—C, however, the primary spring 50b is located on the outer surface of the grid corresponding to the third fuel position from the point of origin. Optionally, a primary spring could be provided in the first location in direction A—C, for a total of eight per perimeter plate. Generally, the number of anti-bowing springs on a grid is approxiately half the number of outer fuel locations bordering the perimeter plates 26.

The outer surface 42' of assembly 16', when viewed from assembly 16 along direction A—C, has the first primary spring 50'c located in the same position relative to the point 28' as primary spring 50a is relative to origin 28. By locating the primary springs 50, 50' in accordance with the alternating pattern as described, adjacent fuel assemblies 10, 10' can be oriented so that the primary springs on the grid 16 will be opposite flat surfaces 52' on grid 16', and conversely.

Figures 3 and 4 show in greater detail an elevation view of the portion of the grid 16 corresponding to a portion B—D of perimeter plate 26 as observed along sight line 3 of Figure 2. Beginning near B, a bent tab 38 is integrally formed to project inwardly through the plane of the paper and is adapted to engage a fuel rod within the grid. The grid structure corresponding to the next fuel rod location includes a vertically separated pair of arches 36, vertically separated dimples 60, and primary and backup anti-bowing springs, 50 and 54 respectively, which form the basis for the present invention. The arches 36 are integrally formed to project into the plane of the drawing to provide stop surfaces for the fuel rods (not shown). The optional dimples are slight indentations which may be employed to strengthen the grid in the vicinity of the arches and the anti-bowing spring. The primary spring 50 is integrally formed from the perimeter plate 26, generally plateau-like arch with horizontally crowned transverse sides 58 and bevelled or vertically crowned ends 56. The primary spring 50 is separated along its sides from the perimeter plate 26, forming slits 62 there between. Along the slits 62, the perimeter plate 26 is also slightly deformed to provide backup springs 54 parallel to and projecting less than the primary spring 50.

It should be appreciated that the surface of the perimeter plate 26 in the area 52 immediately above and below the spring tab 38 is substantially flat and that, as shown in Figure 2, the primary spring 50 of one grid will bear upon the substantially flat surface 52' of the adjacent, oppositely disposed grid. Furthermore, it should be appreciated that the crowned shape 56, 58 of the primary springs is the preferred structure which maximizes contact area during operation, yet minimizes the possibility of one assembly hanging up on the primary springs of another assembly during a refueling when assemblies must be relocated in the reactor core. Furthermore, the horizontal crown 58 minimizes the possibility that projecting structures on adjacent assemblies will lock into the primary springs 50. The pattern of providing a substantially flat surface 52 alternating with a primary spring 50 is repeated around the perimeter of the fuel assembly and on adjacent fuel assemblies, as illustrated in Figure 2.

Referring again to Figure 2, it should be evident that, if every fuel assembly is bordered by an adjacent assembly having an interaction of primary springs 50 and flat surfaces 52 repeated several times along each perimeter plate 26 of every assembly, the resistance of bowing of any single assembly is considerable. In this embodiment, the anti-bowing forces provided by the primary springs 50 are approximately the same at every spring location along the perimeter plate 26. The anti-bowing force is a function of the primary spring deflection and increases as the tendency to bow increases. In the event the bowing forces are so powerful that the primary springs 50 are overcome, the backup springs 54 interact with the flat surface 52. These springs are stiffer and, although some bowing will have occurred by the time the backup springs are engaged, these springs nevertheless substantially reduce the potential bowing that would otherwise occur with conventional grids.

The primary springs 50 are most likely to be overpowered, if at all, late in the life of each fuel assembly, after it has been irradiated a considerable period of time. With assemblies having Zircaloy grids, the the primary springs, being integrally formed therefrom, will experience radiation induced creep and relaxation and therefore provide less anti-bowing force for a given degree of deflection against the opposing flat surface. The primary springs 50 should not be too stiff since this would make initial fuel loading extremely difficult, particularly in the preferred embodiment where the primary springs are slightly loaded, even on fresh assemblies, from the moment they are first inserted into the reactor core adjacent other assemblies. The core loading and refueling operation must not be endangered by assemblies that cannot be moved or relocated relative to one another at any time during the life of the reactor.

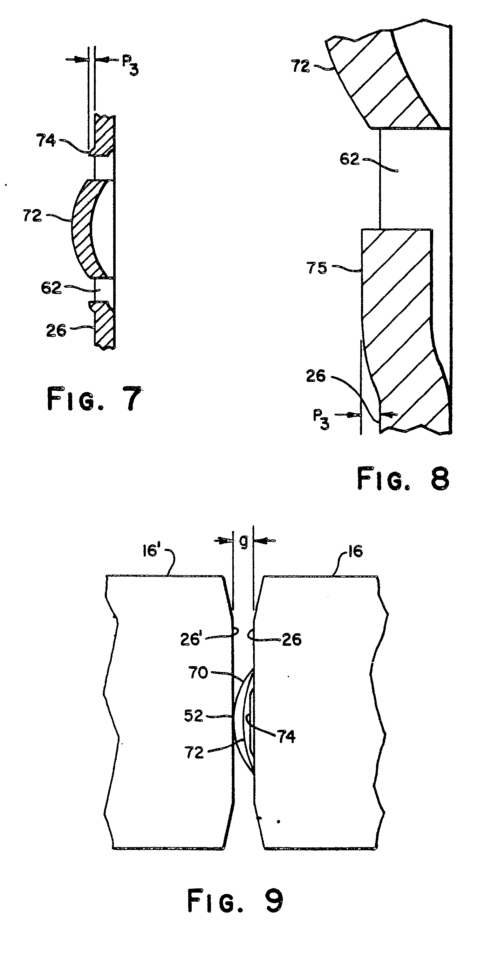

An alternative embodiment of the invention is shown in Figures 5 and 6. Two types of anti-bowing springs are provided on each perimeter plate 26. The primary spring 70 may be identical to spring 50 described in connection with Figures 3 and 4, or it may be slightly narrower and thus slightly softer. Secondary anti-bowing springs 72 are also provided, having a stiffer spring constant but projecting a shorter distance from the perimeter plate 26. As with the embodiment illustrated in Figures 3 and 4, the anti-bowing springs 70 and 72 are provided with backup springs 74 substantially identical to the backup springs 54 described hereinabove.

Figure 6 is a section of Figure 5 along the line 6—6, which cuts the secondary spring 72 along its center, revealing the formation of the arch 76 corresponding to the arch 36 in Figures 3 and 4. The projection P2 is preferably about 0.012 cm., (0.040 inches), which is less than the nominal cold gap between adjacent assemblies and less than the 0.127 cm. (0.050 inch) projection P1 of the primary spring 70.

Figure 7 is a section taken along lines 7—7 of Figure 6 showing the preferred relationship of the secondary spring 72 (or primary spring 70 or 50) with respect to the perimeter plate 26 and backup spring 74 (or 54). In the illustrated embodiment the projection $P_3$ of the backup spring 74 is about 0.025 cm (0.010 inch).

Figure 8 is more detailed view of an alternative backup spring 75, illustrating that the projection need not be sharp, so long as the backup spring surface protrudes the appropriate distance $P_3$ from the perimeter plate 26.

Figure 9 shows schematically the interaction between two adjacent center grids 16, 16' of the type having both primary 70 and secondary 72 anti-bowing springs. Assuming that each of the assemblies is fresh, i.e., has not yet been burned in the reactor core, The gap g between opposite perimeter plates 26, 36' is 0.113 cm (0.045 inch). In the preferred embodiment of the invention, only the midplane grid 16 carries the anti-bowing springs 70, 72, and backup springs 74. As may be visualized from Figures 1 and 2 during insertion of an assembly 10 into the core, the midplane grid 16 passes downward along each of the upper grids above the midplane grid 16' neighboring assembly. The primary springs 70 will interact with the flat surfaces of each of the upper grids until the two assemblies are properly aligned with the core with the respective midplane grids 16, 16' opposed. Thus, the primary spring 70, which nominally projects 0.127 cm (0.050 inch), deflected slightly as it comes into contact with each of the upper grids on the neighboring assembly and remains deflected 0.005 inch (0.013 cm) as the assembly comes to rest wth the center grids 16, 16' in opposition. It should be understood that, if additional anti-bowing measures are needed, one or more other grids near the assembly midplane may also be of the type described above.

In order to assure easy insertion of the adjacent assemblies, the spring rate for the primary spring 50, in the embodiment (Figure 2) having seven primary springs 50 and no secondary springs on each perimeter plate 26, is preferably about $3.5 \times 10^5$ N/m (2000 pounds per inch) deflection at the point of contact. With the embodiment illustrated in Figures 5 and 6, the primary spring 70 can be somewhat softer, having a spring rate of about $2.1—2.6 \times 10^5$ N/m (1200 to 1500 pounds per inch). In the embodiment shown in Figures 5 and 6, each perimeter plate 26 has approximately an equal number of primary 50 and secondary 72 springs, with the secondary springs having a nominal projection of 0.10 cm (0.040 inch), which provides a clearance from opposite flat surface of about 0.013 cm (0.005 inch).

Referring again to Figure 9, after the fuel assemblies are in place, and as the reactor core is heated, the nominal gap increases. Because of lateral flow forces, slight bowing may begin immediately, tending to close the gap and maintain contact between the primary spring 70 and the opposite flat surface 52'. As the fuel assemblies are irradiated, the grids and other members grow, tending to decrease the gap g, which would normally inhibit bowing. However, the spring 70 is also undergoing creep through the effect of irradiation on stressed Zircaloy. Thus the effectiveness of spring 70 may not in some cases be sufficient to resist the bowing forces. As the gap g closes the secondary spring 72 contacts the opposite flat surface 52' and provides a substantial resistance to further bowing. The characteristic of spring 72 is not changes early in the cycle because it is not initially stressed and therefore does not relax substantially as a result of irradiation.

At the end of a burnup cycle, when the assemblies must be removed, the core is cooled to ambient temperatures and the spacing between fuel assemblies is reduced thereby increasing spring deflection. Even though contact of the primary springs 70 may exist, no great effort is required to remove fuel assemblies because of the flexibility of the springs.

In the embodiment represented in Figure 9, which has the relatively weak primary springs 70 and the stiffer secondary spring 72, it is not believed that the very stiff backup spring 74 will ever make contact with the opposite flat surface 52', (except under a seismic event) since the secondary spring 72 is sufficient to resist the bowing forces. The backup springs 74 are preferably retained, however, as structure for limiting the lateral motion of the fuel assemblies in the event of a severe seismic disturbance. The backup spring 74 helps reduce the accumulated impact load that may be felt at one side of the nuclear reactor core should a seismic disturbance propel the midplanes of all assemblies in single direction. Thus, the total available gap accumulated over the midplane of all assemblies is effectively reduced and this reduces the momentum of the core with a concomitant reduction in the impact on peripheral assemblies during an earthquake.

In the embodiment illustrated in Figures 3 and 4, which have only a primary spring 50, the backup spring 54 is more likely to contact the opposing flat surface 52 and act as an anti-bowing spring of last resort, especially for very severe bowing forces.

**Claims**

1. A nuclear fuel assembly frame of the type having a plurality of axially spaced apart grids, each grid having a plurality of substantially flat, rigid perimeter plates circumscribing a network of rigid interlaced strips, the strips forming a rigid egg-crate structure defining an array of openings each adapted to receive a nuclear fuel rod transversely of the grid, characterised by:—

at least the grid (14, 16) disposed at the midplane of the frame having a plurality of antibowing springs (50) integrally formed on the outer surface of each perimeter plate (26) and projecting outwardly therefrom a predetermined distance, the springs (50) being horizontally separated in periodic alternation with substantially flat portions (52) of the outer surface of said plate (26).

2. A fuel assembly frame according to Claim 1, characterised in that each anti-bowing spring (50) has adjacent thereto, a backup spring (54) integrally formed from the perimeter plate (26) and projecting from the plate a distance less than the projection of said anti-bowing spring, the backup spring (54) being stiffer than the anti-bowing spring (50) (Figure 3).

3. A fuel assembly frame according to Claim 1, characterised in that the plurality of anti-bowing springs (50) on each perimeter plate (26) consists of horizontally alternating primary (70) and secondary springs (72), the primary springs (70) having a greater projection and less stiffness than the secondary springs (72) (Figure 5).

4. A fuel assembly frame according to Claim 2, characterised in that the plurality of anti-bowing springs (50) on each perimeter plate (26) consists of horizontally alternating primary and secondary springs (70) and (72), the primary springs (70) having a greater projection and less stiffness than the secondary springs (72).

5. A fuel assembly frame according to Claim 4, the primary and secondary springs (70) and (72) each being characterised by a vertically elongate, generally plateau-like projection integrally connected at its upper and lower ends to the perimeter plate (26;, and having vertical and horizontal crowning.

6. A fuel assembly frame according to Claim 1, characterised in that each anti-bowing spring (50) is in the form of a vertically elongated, generally plateau-like projection integrally connected at its upper and lower ends to the perimeter plate (26).

7. A fuel assembly frame according to Claim 6, characterised in that each anti-bowing spring (50) is crowned vertically and horizontally.

8. A fuel assembly frame according to Claim 7, characterised in that the perimeter plate (26) is made of Zircaloy, and in that the total number of anti-bowing springs (50) on each grid (14), (16) is approximately half the number of fuel rod openings (31) bordering the inside surfaces of the perimeter plates (26).

9. A fuel assembly frame according to Claim 8, characterised in that the stiffness of each anti-bowing spring (50) is about $3.5 \times 10^5$N/m (2000 pounds per inch) in the unloaded, unirradiated condition.

10. A fuel assembly frame according to Claim 9, characterised in that the projection of the anti-bowing springs (50) is about 0.127 cm (0.05 inch).

11. A fuel assembly frame according to Claim 1, characterised in that the total number of anti-bowing springs (50) on each grid (14), (16), is approximately half the number of fuel rod openings (31) bordering the inside surfaces of the perimeter plate (26).

12. A fuel assembly frame according to Claims 2 or 4, characterised in that the portion of the perimeter plate (26) along side each anti-bowing spring (50, 70, 72) has vertical slits (62) therein with one edge of the slit (62) being bent to project outwardly from the perimeter plate (26) to form said backup springs (54, 74).

13. A fuel assembly frame according to Claim 12, characterised in that the backup spring (54, 74) projection from the perimeter plate (26) is about 0.025 cm (0.010 inch), and in that the perimeter plate (20) is made of Zircaloy.

14. A fuel assembly frame according to Claim 3, characterised in that each primary (70) and secondary (72) spring is in the form of a vertically elongated generally plateau-like arch.

15. A fuel assembly frame according to Claim 14, characterised in that the perimeter plate (26) is made of Zircaloy, in that the primary spring (70) projection is about 0.025 cm (0.010 inch) greater than the secondary spring (72) projection, and in that the primary spirng (70) stiffness is about $2.1—2.6 \times 10^5$N/m (1200–1500 pounds per inch) in the unirradiated, unloaded condition.

16. A combination of two elongated nuclear fuel assemblies of the type having a plurality of longitudinally spaced apart grids supporting a regular array of elongated fuel rods, each grid including a plurality of substantially flat, rigid perimeter plates circumscribing the fuel rods and defining a polygonal assembly cross section, the assemblies further being supported in parallel side by side relationship such that an arbitrary first perimeter plate of a mid-plane grid of one assembly is coextensive and opposite an arbitrary second perimeter plate of a corresponding mid-plane grid of another assembly whereby a predetermined nominal gap is provided therebetween, characterised by:

said respective first and second perimeter plates (26) each having a plurality of anti-bowing springs (50), (50'), integrally formed thereon and projecting outwardly therefrom the (50, 50') being laterally separated in periodic alternation with substantially flat portions (52'), (50) of the outer surfaces (42, 42') of the respective plates (26) such that each spring (50) on the first perimeter plate (26) is opposite a flat surface (42') on the second plate (20), and conversely, each spring (50') on the second plate (26) is opposite a flat surface (42) on the first plate.

17. A combination of fuel assemblies according to Claim 16, characterised in that each anti-bowing spring (50, 50') has adjacent thereto, a backup spring (54, 54') integrally formed from the perimeter plate (26) and projecting from the plate (26) a distance less than the projection of said anti-bowing spring (50, 50'), the backup spring (54, 54') being stiffer than the anti-bowing spring (50, 50').

18. A combination of fuel assemblies according to Claim 16, characterised in that the plurality of anti-bowing springs (50, 50') on each perimeter plate (26) consists of horizontally alternating primary (70) and secondary springs (72), the primary springs (70) having a greater projection and less stiffness than the secondary springs (72).

19. A combination of fuel assemblies according to Claim 17, characterised in that the plurality of anti-bowing springs (50) on each perimeter plate consists of horizontally alternating primary (70) and secondary (72) springs, the primary springs (70) having a greater projection and less stiffness than the secondary springs (72).

20. A combination of fuel assemblies according to Claim 19, characterised in that each anti-bowing spring (70, 72) is in the form of a vertically elongated, plateau-like arch.

21. A combination of fuel assemblies according to Claim 17, characterised in that each anti-bowing spring (50) is in the form of a vertically elongated, plateau-like arch (56, 58).

22. A combination of fuel assemblies according to Claim 21, characterised in that each arch (56, 58) is crowned vertically and horizontally.

23. A combination fuel assemblies according to Claim 21, characterised in that the perimeter plate (26) is made of Zircaloy and the stiffness of each anti-bowing spring (50) is about $3.5 \times 10^5$N/m (2,000 pounds per inch) in the unloaded, unirradiated condition.

24. A combination of fuel assemblies according to Claim 23, characterised in that the projection of the anti-bowing springs (50) is about 0.127 cm (0.05 inch).

25. A combination of assemblies according to Claim 24, characterised in that the total number of anti-bowing springs (50), on each grid is approxi-

mately half the number of fuel rods (12) bordering the inside surfaces of all the perimeter plates (26).

26. A combination of fuel assemblies according to Claim 25, characterised in that the nominal gap is about 0.113 cm (0.045 inch).

27. A combination of assemblies according to Claim 21, characterised in that the total number of anti-bowing springs (50) on each grid (14, 16) is approximately half the number of fuel rods (12) bordering the inside surfaces of all the perimeter plates (26) in the grid (14, 16).

28. A combination of assemblies according to either of Claims 17 or 21, characterised in that the portion (52, 52') of the perimeter plate (26) along side each anti-bowing spring (50, 50') has a vertical slit (62) therein, with one edge of the slit (62) being bent to project outwardly from the perimeter plate (26) to form said backup spring (54).

29. A combination of fuel assemblies according to Claim 16, characterised in that the unloaded projection (PI) of the anti-bowing springs (50) is at least the distance of the nominal gap.

**Patentansprüche**

1. Gestell für Kernbrennstoffbündel der Art mit mehreren axial beabstandeten Gittern jeweils mit mehreren im wesentlichen flachen, starren Umfangsplatten, die ein Netz starrer verflochtener Leisten umschreiben, wobei die Leisten eine starre Rechteckrasterstruktur bilden, die eine Anordnung von zur Aufnahme non je einem brennstab quer zum Gitter bestimmten Öffnungen definiert, dadurch gekennzeichnet, dass mindestens das in der Mittelebene des Gestells angeordnete Gitter (14, 16) eine Mehrzahl von Verbiegung verhindernden Federn (50) aufweist, die einstückig an die Aussenfläche jeder Umfangsplatte (26) angeformt sind und von dieser nach aussen um eine vorgegebene Länge vorstehen, wobei die Federn (50) periodisch abwechselnd mit im wesentlichen flachen Teilen (52) der Aussenfläche diese Platte (26) horizontal voneinander getrennt sind.

2. Brennelementgestell nach Anspruch 1, dadurch gekennzeichnet, dass jede Verbiegung verhindernde Feder (50) daneben eine Reservefeder (54) aufweist, die einstückig aus der Umfangsplatte (26) geformt ist und von dieser um einen geringeren Abstand als jene Verbiegung verhindernde Feder absteht, wobei die Reservefeder (54) steifer als die Verbiegung verhindernde Feder (50) ist (Figur 3).

3. Brennelementgestell nach Anspruch 1, dadurch gekennzeichnet, dass die Mehrzahl der Verbiegung verhindernden Federn (50) auf jeder Umfangsplatte (26) aus horizontal abwechselnden primären (70) und sekundären Federn (72) besteht, wobei die primären Federn (70) weiter vorstehen und weniger steif als die sekundären Federn (72) sind (Figur 5).

4. Brennelementgestell nach Anspruch 2, dadurch gekennzeichnet, dass die Mehrzahl der Verbiegung verhindernden Federn (50) auf jeder Umfangsplatte (26) aus horizontal abwechselnden primären und sekundären Federn (70 bzw. 72) bestehen, wobei die primären Federn (70) weiter vorstehen und weniger steif sind als die sekundären Federn (72).

5. Brennelementgestell nach Anspruch 4, bei dem die primären und sukundären Federn (70 bzw. 72) jeweils dadurch gekennzeichnet sind, dass sie einen senkrecht verlängerten, allgemein plateauartigen Vorsprung, der mit seinem Ober- und Unterende einstückig mit der Umfangsplatte (26) verbunden ist, sowie senkrechte und waagerechte Wölbungen aufweisen.

6. Brennelementgestell nach Anspruch 1, dadurch gekennzeichnet, dass die Verbiegung verhindernden Federn (50) je die Gestalt eines senkrecht verlängerten, im allgemeinen plateauartigen Vorsprungs besitzen, der mit seinem Ober- und Unterende einstückig mit der Umfangsplatte (26) verbunden ist.

7. Brennelementgestell nach Anspruch 6, dadurch gekennzeichnet, dass die Verbiegung verhindernden Federn (50) jeweils senkrect und waagerecht gewölbt sind.

8. Brennelementgestell nach Anspruch 7, dadurch gekennzeichnet, dass die Umfangsplatte (26) aus Zircaloy hergestellt ist, und dass die Gesamtzahl Verbiegung verhindernder Federn (50) an jedem Gitter (14, 16) ungefähr der halben Anzahl der die Innenflächen der Umfangsplatten (26) begrenzenden Brennstaböffnungen (31) gleich ist.

9. Brennelementgestell nach Anspruch 8, dadurch gekennzeichnet, dass die Steifheit der Verbiegung verhindernden Federn (50) im unbelasteten, unbestrahlten Zustand je etwa $3,5.10^5$N/m (2000Pfund pro Zoll) beträgt.

10. Brennelementgestell nach Anspruch 9, dadurch gekennzeichnet, dass die Verbiegung verhindernden Federn (50) ungefähr 0,127 cm (0,05 Zoll) vorstehen.

11. Brennelementgestell nach Anspruch 1, dadurch gekennzeichnet, dass die Gesamtzahl Verbiegung verhindernder Federn (50) an jedem Gitter (14, 16) ungefähr der halben Anzahl der die Innenflächen der Umfangsplatte (26) begrenzenden Brennstaböffnungen (31) gleich ist.

12. Brennelementgestell nach Anspruch 2 oder 4, dadurch gekennzeichnet, dass der Teil der Umfangsplatte (26) entlang jeder Verbiegung verhindernden Feder (50, 70, 72) darin senkrechte Schlitze (62) aufweist, wobei eine Kante des Schlitzes (62) so gebogen ist, dass sie von der Umfangsplatte (26) zur Bildung besagter Reservefedern (54, 74) nach aussen vorsteht.

13. Brennelementgestell nach Anspruch 12, dadurch gekennzeichnet, dass die Reservefeder (54, 74) von der Umfángsplatte (26) ungefähr 0,025 cm (0,010 Zoll) vorsteht un dass die Umfangsplatte (26) aus Zircaloy hergestellt ist.

14. Brennelementgestell nach Anspruch 3, dadurch gekennzeichnet, dass die primären (70) und sekundären (72) Federn je die Gestalt eines senkrecht verlängerten, im allgemeinen plateauartigen Bogens besitzen.

15. Brennelementgestell nach Anspruch 14, dadurch gekennzeichnet, dass die Umfangsplatte (26) aus Zircaloy hergestellt ist, dass die primäre Feder (70) um etwa 0,025 cm (0,010 Zoll) weiter vorsteht als die sekundäre Feder (72), und dass die Steifheit der primären Feder (70) im unbestrahlten, unbelasteten Zustand etwa 2,1—2,6.10$^5$N/m (1200—1500 Pfund pro Zoll) beträgt.

16. Kombination aus zwei länglichen Kernbrennstoffelementen der Art mit mehreren längs beabstandeten Gittern, die eine regelmässige Anordnung länglicher Brennstoffstäbe abstützen, wobei die Gitter jeweils eine Mehrzahl im wesentlichen flacher, starrer Umfangsplatten einschliessen, welche die Brennstoffstäbe umschreiben und einen polygonalen Elementquerschnitt definieren, wobei die Elemente ferner parallel nebeneinander so abgestützt sind, dass irgendeine erste Umfangsplatte eines mittelebenen Gitters des einen Elements die gleiche Länge wie irgendeine zweite Umfangsplatte eines entsprechenden mittelebenen Gitters eines anderen Elements aufweist und dieser gegenüberliegt, wodurch dazwischen eine vorbestimmte nominelle Lücke entsteht, dadurch gekennzeichnet, dass die diesbezüglichen ersten und zweiten Umfangsplatten (26) je eine Mehrzahl von einstückig daran angeformten und davon nach aussen vorstehenden, Verbiegung verhindernden Federn (50, 50') aufweisen, die periodisch abwechselnd mit im wesentlichen flachen Teilen (52', 52) der Aussenflächen (42, 42') der entsprechenden Platten (26) seitlich so voneinander getrennt sind, dass jede Feder (50) auf der ersten Umfangsplatte (26) einer flachen Oberfläche (42') auf der zweiten Platte (20) gegenüberliegt und umgekehrt jede Feder (50') auf der zweiten Platte (26) einer flachen Oberfläche (42) aud der ersten Platte gegenüberliegt.

17. Kombination aus Brennstoffelementen nach Anspruch 16, dadurch gekennzeichnet, dass jede Verbiegung verhindernde Feder (50, 50') daneben eine Reservefeder (54, 54') aufweist, die einstückig an die Umfangsplatte (26) angeformt ist und von der Platte (26) um eine geringere Länge als jene Verbiegung verhindernde Feder (50, 50') vorsteht, wobei die Reservefeder (54, 54') steifer als die Verbiegung verhindernde Feder (50, 50') ist.

18. Kombination aus Brennstoffelementen nach Anspruch 16, dadurch gekennzeichnet, dass die Mehrzahl Verbiegung verhindernder Federn (50, 50') auf jeder Umfangsplatte (26) aus horizontal abwechselnden primären (70) und sekundären Federn (72) bestehen, wobei die primären Federn (70) weiter vorstehen und weniger steif sind als die sekundären Federn (72).

19. Kombination aus Brennstoffelementen nach Anspruch 17, dadurch gekennzeichnet, dass die Mehrzahl Verbiegung verhindernder Federn (50) auf jeder Umfangsplatte aus horizontal abwechselnden primären (70) und sekundären (72) Federn bestehen, wobei die primären Federn (70) weiter vorstehen und winiger steif sind als die sekundären Federn (72).

20. Kombination aus Brennstoffelementen nach Anspruch 19, dadurch gekennzeichnet, dass jede Verbiegung verhindernde Feder (70, 72) die Gestalt eines senkrecht verlängerten, plateauartigen Bogens aufweist.

21. Kombination aus Brennstoffelementen nach Anspruch 17, dadurch gekennzeichnet, dass jede Verbiegung verhindernde Feder (50) die Gestalt eines senkrecht verlängerten, plateauartigen Bogens (56, 58) aufweist.

22. Kombination aus Brennstoffelementen nach Anspruch 21, dadurch gekennzeichnet, dass jeder Bogen (56, 58) senkrecht un waagerecht gewölbt ist.

23. Kombination aus Brennstoffelementen nach Anspruch 21, dadurch gekennzeichnet, dass die Umfangsplatte (26) aus Zircaloy hergestellt ist und die Steifheit der Verbiegung verhindernden Federn (50) im unbelasteten, unbestrahlten Zustand jeweils etwa 3,5.10$^5$N/m (2000 Pfund pro Zoll) beträgt.

24. Kombination aus Brennstoffelementen nach Anspruch 23, dadurch gekennzeichnet, dass die Verbiegungverhindernden Federn (50) um etwa 0,127 cm (0,05 Zoll) vorstehen.

25. Kombination aus Elementen nach Anspruch 24, dadurch gekennzeichnet, dass die Gesamtzahl Verbiegung verhinderinder Federn (50) auf jedem Gitter ungefähr der halben Anzahl neben den Innenflächen sämtlicher Umfangsplatten (26) liegender Brennstäbe (12) gleich ist.

26. Kombination aus Brennstoffelementen nach Anspruch 25, dadurch gekennzeichnet, dass die nominelle Lücke etwa 0,113 cm (0,045 Zoll) beträgt.

27. Kombination aus Elementen nach Anspruch 21, dadurch gekennzeichnet, dass die Gesamtzahl Verbiegung verhindernder Federn (50) auf jedem Gitter (14, 16) ungefähr der halben Anzahl neben den Innenflächen sämtlicher Umfangsplatten (26) im Gitter (14, 16) liegender Brennstäbe (12) gleich ist.

28. Kombination aus Elementen nach Anspruch 17 oder 21 , dadurch gekennzeichnet, dass der Teil (52, 52') der Umfangsplatte (26) entlang jeder Verbiegung verhindernden Feder (50, 50') darin eine senkrechten Schlitz (62) aufweist, wobei eine Kante des Schlitzes (62) so gebogen ist, dass sie von der Umfangsplatte (26) zur Bildung jener Reservefeder (54) nach aussen vorsteht.

29. Kombination aus Brennstoffelementen nach Anspruch 16, dadurch gekennzeichnet, dass der unbelastete Vorsprung (Pl) der Verbiegung verhindernden Federn (50) mindestens der Grösse der nominellen Lücke entspricht.

## Revendications

1. Un cadre d'assemblage combustible nucléaire du type ayant une pluralité de grilles espacées axialement, chaque grille ayant un pluralité de plaques périphériques rigides, sensiblement plates, circonscrivant un réseau de bandes entrelacées rigides, les bandes formant une structure de support à oeufs rigide définissant un arrangement d'orifices, chacun adapté pour recevoir une cartouche de combustible nucléaire transversalement par rapport à la grille, caractérisé par:—

au moins la grille (14, 16) située au plan médian du cadre ayant une pluralité de ressorts anti-flexion (50) venus de matière sur la face externe de chaque plaque périphérique (26) et faisant saillie vers l'extérieur à partir de celle-ci sur une distance prédéterminée, les ressorts (50) étant séparés horizontalement en alternance (52) de la face externe de ladite plaque (26).

2. Un cadre d'assemblage combustible selon la revendication 1, caractérisé en ce que chaque ressort antiflexion (50) a, adjacent à ce dernier, un ressort de renfort (54) venu de matière à partir de la plaque périphérique 26 et faisant saillie à partir de la plaque sur une distance moindre que la saillie dudit ressort anti-flexion, le ressort de renfort (54) étant plus raide que le ressort anti-flexion (50), (figure 3).

3. Un cadre d'assemblage combustible selon la revendication 1, caractérisé en ce que la pluralité de ressorts anti-flexion (50) sur chaque plaque périphérique (26) est constituée de ressorts primaires (70) et secondaires (72) alternant horizontalement, les ressorts primaires (70) faisant une saillie plus importante et ayant une raideur moindre que les ressorts secondaires (72) (figure 5).

4. Un cadre d'assemblage combustible selon la revendication 1, caractérisé en ce que la pluralité de ressorts anti-flexion (50) sur chaque plaque périphérique (26) est constituée de ressorts primaires et secondaires (70) et (72) alternant horizontalement, les ressorts primaires (70) faisant une saillie plus importante et ayant une raideur moindre que les ressorts secondaires (72).

5. Un cadre d'assemblage combustible selon la revendication 4, les ressorts primaires et secondaires (70) et (72) étant chacun caractérisé par une saillie allongée verticalement, généralement en forme de plateau, reliée de façon solidaire à ses extrémités supérieure et inférieure à la plaque périphérique (26) et étant bombée verticalement et horizontalement.

6. Un cadre d'assemblage combustible selon la revendication 1, caractérisé en ce que chaque ressort antiflexion (50) a la forme d'une saillie allongée verticalement, généralement en forme de plateau, reliée de façon solidaire à ses extrémités supérieure et inférieure à la plaque périphérique (26). 7. Un cadre d'assemblage combustible selon la revendication 6, caractérisé en ce que chaque ressort antiflexion (50) est bombé verticalement et horizontalement.

8. Un cadre d'assemblage combustible selon la revendication 7, caractérisé en ce que la plaque périphérique (26) est faite de Zircaloy, et en ce que le nombre total de ressorts anti-flexion (50) sur chaque grille (14), (16) est approximativement la moitié du nombre d'orifices de cartouches de combustible (31) bordant les faces internes des plaques périphériques (26).

9. Un cadre d'assemblage combustible selon la revendication 8, caractérisé en ce que la raideur de chaque ressort anti-flexion (50) est d'environ 3,5×10⁵N/m (2000 livres par pouce) à l'état non-chargé et non-irradié.

10. Un cadre d'assemblage combustible selon la revendication 9, caractérisé en ce que la saillie des ressorts anti-flexion (50) est d'environ 0,127 cm (0,05 pouces).

11. Un cadre d'assemblage combustible selon la revendication 1, caractérisé en ce que le nombre total de ressorts anti-flexion (50) sur chaque grille (14), (16) est approximativement la moitié du nombre d'orifices de cartouches de combustible (31) bordant les faces internes des plaques périphériques (26).

12. Un cadre d'assemblage combustible selon les revendication 2 ou 4, caractérisé en ce que la portion de la plaque périphérique (26) le long de chaque ressort anti-flexion (50, 70, 72) comporte, sur elle-même, des fentes verticales (62) un bord de la fente (62) étant courbé pour faire saillie vers l'extérieur à partir de la plaque périphérique (26) pour former lesdits ressorts de renfort (54, 74).

13. Un cadre d'assemblage combustible selon la revendication 12, caractérisé en ce que la saillie du ressort de renfort (54, 74) à partir de la plaque périphérique (26) est d'environ 0,025 cm (0,010 pouces) et en ce que la plaque périphérique (26) est faite de Zircaloy.

14. Un cadre d'assemblage combustible selon la revendication 3, caractérisé en ce que chaque ressort primaire (70) et secondaire (:72) a la forme d'une voûte allongée verticalement, généralement en forme de plateau.

15. Un cadre d'assemblage combustible selon la revendication 14, caractérisé en ce que la plaque périphérique (26) est faite de Zircaloy, en ce que la saillie du ressort primaire (70) est supérieure d'environ 0,025 cm (0,010 pouces) à la saillie du ressort secondaire (72) et en ce que la raideur du ressort primaire (70) est d'environ 2,1—2,6×10⁵N/m (1200—1500 livres par pouce) à l'état non-irradié, et non-chargé.

16. Une combinaison de deux assemblages combustibles nucléaires allongés du type ayant une pluralité de grilles espacées longitudinalement supportant un arrangement régulier de cartouches de combustible allongées, chaque grille comportant un pluralité de plaques périphériques rigides, sensiblement plates, circonscrivant les cartouches de combustible et définissant une section d'assemblage polygonale, les assemblages étant supportés en outre en relation parallèle côte à côte de telle façon qu'une première plaque périphérique arbitraire d'une grille de plan médian d'un assemblage se trouve en prolongement mutuel et en face d'une deuxième plaque périphérique arbitraire d'une grille de plan médian correspondante d'une autre assemblage, ce par quoi un espace nominal prédéterminé est prévu entre les deux, caractérisée par;—

lesdites première et deuxième plaques périphériques respectives (26) ayant chacune une pluralité de ressorts anti-flexion (50), (50') venus de matière sur celles-ci et faisant saillie à l'extérieur de celles-ci, les ressorts (50), (50') étant séparés latéralement en alternance périodique avec des portions sensiblement plates (52') (50) des faces externes (42, 42') des plaques respectives (26) de telle façon que chaque ressort (50) sur la première plaque périphérique (26) est en face d'une surface plate (42') sur la deuxième plaque (26), et inversement, chaque ressort (50') sur la deuxième plaque (26) est en face d'une surface plate (42) sur la première plaque.

17. Une combinaison d'assemblages combustibles selon la revendication 16, caractérisée en ce que chaque ressort anti-flexion (50, 50') a, adjacent à ce dernier, un ressort de renfort (54, 54') venu de matière à partir de la plaque périphérique (26) et faisant saillie à partir de la plaque (26) sur une distance moindre que la saillie dudit ressort anti-flexion (50, 50'), le ressort de renfort (54, 54') étant plus raide que le ressort anti-flexion (50, 50').

18. Une combinaison d'assemblages combustibles selon la revendication 16, caractérisée en ce que chaque pluralité de ressorts anti-flexion (50, 50') sur chaque plaque périphérique (26) est constituée de ressorts primaires (70) et secondaires (72) alternant horizontalement, les ressorts primaires (70) faisant saillie de façon plus importante et ayant un raideur moindre que les ressorts secondaires (72).

19. Une combinaison d'assemblages combustibles selon la revendication 17, caractérisée en ce que chaque pluralité de ressorts anti-flexion (50) sur chaque plaque périphérique est constituée de ressorts primaires (70) et secondaires (72) alternant horizontalement, les ressorts primaires (70) faisant saillie de façon plus importante et ayant un raideur moindre que les ressorts secondaires (72).

20. Une combinaison d'assemblages combustibles selon la revendication 19, caractérisée en ce que chaque ressort anti-flexion (70, 72) a la forme d'une voûte allongée verticalement, en forme de plateau.

21. Une combinaison d'assemblages combustibles selon la revendication 17, caractérisée en ce que chaque ressort anti-flexion (50) a la forme d'une voûte allongée verticalement, en forme de plateau (56, 58).

22. Une combinaison d'assemblages combustibles selon la revendication 21, caractérisée en ce que chaque voûte (56, 58) est bombée verticalement et horizontalement.

23. Une combinaison d'assemblages combustibles selon la revendication 21, caractérisée en ce que la plaque périphérique (26) est faite de Zircaloy et la raideur de chaque ressort anti-flexion (50) est d'environ $3,5.10^5$N/m (2,000 livres par pouce) à l'état non-chargé et non-irradié.

24. Une combinaison d'assemblages combustible selon la revendication 23, caractérisée en ce que la saillie des ressorts anti-flexion (50) est d'environ 0,127 cm (0,05 pouces).

25. Une combinaison d'assemblages combustibles selon la revendication 24, caractérisée en ce que le nombre total des ressorts anti-flexion (50), sur chaque grille est approximativement la moitié du nombre de cartouches de combustible (12) bordant les faces internes de toutes les plaques périphériques (26).

26. Une combinaison d'assemblages combustibles selon la revendication 25, caractérisée en ce que l'espace nominal est d'environ 0,113 cm (0,045 pouces).

27. Une combinaison d'assemblages selon la revendication 21, caractérisée en ce que le nombre total de ressorts anti-flexion (50) sur chaque grille (14, 16) est approximativement la moitié du nombre de cartouches de combustible (12) bordant les faces internes de toutes les plaques périphériques (26) dans la grille (14, 16).

28. Une combinaison d'assemblages selon l'une quelconque des revendications 17 ou 21, caractérisée en ce que la portion (52, 52') de la plaque périphérique (26) le long de chaque ressort anti-flexion (50, 50') comporte sur elle-même une fente verticale (62), un bord de la fente (62) étant courbé pour faire saillie vers l'extérieur à partir de la plaque périphérique (26) pour former ledit ressort de renfort (54).

29. Une combinaison d'assemblages combustibles selon la revendication 16, caractérisée en ce que la saillie non-chargée ($P_1$) des ressorts anti-flexion (50) est au moins égale à l'espace nominal.

0 080 853

FIG. 1

FIG. IA

FIG. 2

FIG. 3

FIG. 4

FIG. 5

FIG. 6

2

FIG. 7

FIG. 8

FIG. 9